# EUROPÄISCHE PATENTSCHRIFT

(11) **EP 3 986 811 B1**
(45) Veröffentlichungstag und Bekanntmachung des Hinweises auf die Patenterteilung: **16.04.2025**
(21) Anmeldenummer: 20793665.9
(22) Anmeldetag: 20.10.2020
(51) Int. Cl.: B65G 21/20, B65G 15/58

(54) **VERWENDUNG EINER VORRICHTUNG ZUM AUFLIEGENDEN TRANSPORT VON VORZUGSWEISE TAFELFÖRMIGEN WERKSTÜCKEN**
USE OF A DEVICE FOR TRANSPORTING PREFERABLY TABULAR WORKPIECES, IN A HORIZONTAL MANNER
UTILISATION D'DISPOSITIF DE TRANSPORT DE PIÈCES DE PRÉFÉRENCE TABULAIRES, DE MANIÈRE HORIZONTALE

(30) Priorität: 08.11.2019 DE 102019130222; 18.12.2019 DE 202019107078 U
(43) Veröffentlichungstag der Anmeldung: 27.04.2022
(73) Patentinhaber: Neuhäuser GmbH, 44532 Lünen (DE)
(72) Erfinder: WEISCHENBERG, Tobias, 44532 Lünen (DE)
(74) Vertreter: Andrejewski - Honke Patent- und Rechtsanwälte Partnerschaft mbB
(86) Internationale Anmeldenummer: PCT/EP2020/079440
(87) Internationale Veröffentlichungsnummer: WO 2021/089315

(56) Entgegenhaltungen:
- EP-A1- 1 533 255
- EP-A1- 2 520 520
- EP-A2- 0 827 918
- WO-A1-91/17864
- DE-A1- 4 108 397
- JP-A- 2010 036 998
- JP-U- S4 843 381
- KR-B1- 101 981 472
- US-A- 3 592 334
- US-A1- 2016 257 142

## Beschreibung

Die Erfindung betrifft die Verwendung einer Vorrichtung zum aufliegenden Transport von vorzugsweise tafelförmigen Werkstücken mittels Unterdruck.

Vorrichtungen zum insbesondere aufliegenden Transport von vorzugsweise tafelförmigen Werkstücken werden beispielsweise in der Automobilfertigung, der Automobilzuliefererindustrie, aber auch bei der Herstellung von Haushaltsgegenständen wie Kühlschränken ebenso wie in der Möbelherstellung eingesetzt. Bei den tafelförmigen Werkstücken handelt es sich folglich primär um Blechplatinen aus Metall aber auch beispielsweise Holzwerkstoffplatten, Glasplatten, Kunststoffplatten etc. Meistens werden solche Vorrichtungen eingesetzt, um die beispielsweise auf einer Palette zugeführten tafelförmigen Werkstücke vom Standort der Palette bis hin zu einer Bearbeitungsstation zu transportieren. Die tafelförmigen Werkstücke können beispielsweise mit einem Roboter von der Palette aufgenommen und auf die fragliche Vorrichtung aufgelegt werden. An der Bearbeitungsstation erfolgt dann die Abnahme des betreffenden Werkstückes.

Sofern in diesem Zusammenhang ferromagnetische Werkstücke transportiert werden, kann eine Vorrichtung des eingangs beschriebenen Aufbaus bzw. eine solche nach der vorliegenden Erfindung auch zusätzlich mit einer oder mehreren Magnetvorrichtungen ausgerüstet werden, wie dies beispielhaft der auf die Anmelderin zurückgehende Stand der Technik nach der EP 1 038 805 B1 im Detail beschreibt. Das hat sich grundsätzlich bewährt.

Der weitere Stand der Technik nach der DE 10 2005 050 687 A1 geht insgesamt so vor, dass der zur Beaufschlagung der tafelförmigen Werkstücke erforderliche Unterdruck mit Hilfe eines Gebläses erzeugt wird. Dieses Gebläse stellt dabei einen Bestandteil einer Unterdruckeinrichtung dar und ist beispielsweise im Innern der Haltevorrichtung angeordnet.

Beim weiteren Stand der Technik nach der WO 91/17864 A1 wird so vorgegangen, dass die zu transportierenden Werkstücke zusätzlich mit Hilfe von Luftdüsen oberhalb eines Fördergurtes beaufschlagt werden. Diese Luftdüsen sind über Kanäle mit der Ausgangsseite des Gebläses verbunden. Auf diese Weise wird das zu transportierende Werkstück mit Hilfe der abgegebenen Luft zusätzlich gegen die obere Oberfläche des Fördergurtes gepresst. Eine solche Vorgehensweise ist dann unter Umständen problematisch, wenn auf den zu transportierenden Werkstücken und insbesondere Blechplatinen Metallspäne und/oder Öl vorhanden sind, die hierdurch unkontrolliert umherfliegen können.

Der Stand der Technik nach JP 2010 036 998 A befasst sich mit einer Vorrichtung zum Transport von Glassubstraten. Dazu ist ein Fördergurt mit Ansaugöffnungen vorgesehen. Außerdem ein Sauggebläse.

Der weitere Stand der Technik nach der KR 101 981 472 B1 betrifft eine Vorrichtung zum Laminieren von Papier und Pappe. In diesem Zusammenhang werden einzelne Bögen mithilfe einer Transportvorrichtung mit Unterdruck bewegt und gestapelt.

Schließlich ist durch die US 3 592 334 eine Transportvorrichtung vorbekannt, bei der ein Fördergurt mit einer großen Anzahl an Öffnungen zum Einsatz kommt.

Die EP2520520A1 offenbart die Verwendung einer Vorrichtung nach dem Oberbegriff des Anspruchs 1.

Der Stand der Technik hat sich grundsätzlich bewährt, bietet allerdings noch Raum für Verbesserungen. Tatsächlich werden heutzutage an solche Vorrichtungen erhöhte Anforderungen im Hinblick auf die Förderdynamik gestellt.

D.h., die zu transportierenden tafelförmigen Werkstücke werden mit größeren Beschleunigungen und Verzögerungen als bisher beaufschlagt, um höhere Fördergeschwindigkeiten zu erreichen. Als Folge hiervon reicht oftmals die durch den erzeugten Unterdruck realisierte Haltekraft in Verbindung mit dem Gewicht bei einem aufliegenden Transport nicht (mehr) aus, um ein Verrutschen des betreffenden tafelförmigen Werkstückes insbesondere bei einer Beschleunigung oder Verzögerung zu verhindern. Erschwerend kommt an dieser Stelle hinzu, dass die genannte Haltekraft abhängig davon ist, wie viele der Ansaugöffnungen im Fördergurt von den einzelnen Werkstücken belegt sind.

Als Folge hiervon führt eine Änderung der Belegung des Fördergurtes zu einer erheblichen Steigerung bzw. Senkung des vom Gebläse erzeugten Unterdruckes. Das ändert gleichzeitig die auf diese Weise zur Verfügung gestellte Haltekraft maßgeblich. Grundsätzlich ist man jedoch bestrebt, die Haltekraft möglichst gleichmäßig einzustellen, d.h. auch bei schwankendem Volumenstrom mit überwiegend gleichem Unterdruck zu arbeiten.

An dieser Stelle hat es bereits Ansätze dahingehend gegeben, der Änderung der Belegung des Fördergurtes dadurch Rechnung zu tragen, dass das Gebläse hinsichtlich seiner Drehzahl geregelt wird. Das setzt jedoch aufwendige Messungen der Belegung des Fördergurtes voraus. Derartige Maßnahmen haben sich folglich nicht durchgesetzt und weil das Gebläse hinsichtlich seiner Drehzahl typischerweise sehr träge reagiert und den sich zeitlich ändernden Belegungen nur mit Verzögerung folgen kann. Tatsächlich werden an dieser Stelle Änderungen der Belegung nahezu im Sekundentakt beobachtet bzw. sind möglich. Hier setzt die Erfindung ein.

Der Erfindung liegt das technische Problem zugrunde, eine derartige Verwendung einer Vorrichtung zum aufliegenden Transport von vorzugsweise tafelförmigen Werkstücken so weiterzuentwickeln, dass ein Verrutschen der Werkstücke auch bei starken Beschleunigungen und Verzögerungen gegenüber dem Fördergurt möglichst aufwandsarm vermieden wird.

Zur Lösung dieser technischen Problemstellung ist die Verwendung nach Anspruch 1 vorgesehen.

Die Erfindung geht zunächst einmal von der Erkenntnis aus, dass der Rückgriff auf den Radialventilator als spezielles Gebläse mit besonderen Vorteilen verbunden ist. Bei einem Ventilator handelt es sich bekanntermaßen um eine fremd angetriebene Strömungsmaschine, welche ein gasförmiges Medium fördert, vorliegend Umgebungsluft, um an den Ansaugöffnungen des Fördergurtes den erforderlichen Unterdruck und damit die notwendige Haltekraft für die betreffenden Werkstücke zu erzeugen. Da im technischen Sprachgebrauch normgemäß die Begriffe Gebläse und Lüfter veraltet sind, wird nachfolgend und durchweg von einem Ventilator bzw. Radialventilator gesprochen.

Erfindungsgemäß kommt nun ein solcher Radialventilator (oder auch Zentrifugalventilator) zum Einsatz, um bei gleicher geförderter Luftmenge bzw. gleichem Volumenstrom im Vergleich zu herkömmlich eingesetzten Axialventilatoren einen größeren Unterdruck zur Verfügung zu stellen. Außerdem zeichnen sich Radialventilatoren dadurch aus, dass Sie über eine nahezu konstante Kennlinie verfügen. D.h., der eingangsseitig erzeugte Unterdruck bleibt auch bei ansteigendem bzw. abfallendem und damit sich ändernden Volumenstrom nahezu konstant.

Das ist für den hier betrachteten erfindungsgemäßen Einsatzfall von besonderer Bedeutung, weil hierdurch automatisch und konstruktiv sowie ohne aufwendige Steuer- und Regelungstechnik der letztlich an den Ansaugöffnungen des Fördergurtes zur Verfügung gestellte Unterdruck praktisch konstant bleibt, und zwar auch dann, wenn sich der Volumenstrom ändert. Eine Änderung des Volumenstromes liegt regelmäßig dann vor, wenn sich die Belegung des Fördergurtes durch eine wechselnde Anzahl an Werkstücken verändert.

Tatsächlich zeichnet sich ein solcher Radialventilator dadurch aus, dass die Luft in der Regel axial und parallel zur Antriebsachse angesaugt wird. Durch die Rotation des Laufrades wird die Luft im Gegensatz zum Axialventilator umgelenkt und radial ausgeblasen. Bei dem erfindungsgemäßen Radialventilator handelt es sich um einen solchen mit einem schneckenförmigen Gehäuse, welches in einen Auslass mündet. Die Luft wird dabei an einer parallel zur Welle des Laufrades orientierten Ansaugöffnung des Radialventilators angesaugt. Diese Ansaugöffnung ist an eine mit der Haltevorrichtung kommunizierende Unterdruckleitung angeschlossen. Dadurch kann der erfindungsgemäße Radialventilator unabhängig und örtlich getrennt von der Haltevorrichtung platziert werden und sorgt die Unterdruckleitung dafür, dass in bzw. an der Haltevorrichtung der erforderliche Unterdruck zur Verfügung steht.

Zu diesem Zweck verfügt die Haltevorrichtung meistens über einen geschlossenen Unterdruckkanal oder ist selbst als ein solcher ausgebildet, wobei der Unterdruckkanal über einen Ansaugkanal mit den Ansaugöffnungen des Fördergurtes kommuniziert. Dabei kann die Haltevorrichtung insgesamt in ihrem Innern als Unterdruckkanal ausgelegt sein und genutzt werden. Dieser Unterdruckkanal weist meistens kopfseitig den Ansaugkanal auf, welcher mit den Ansaugöffnungen des Fördergurtes kommuniziert.

Jedenfalls sorgt der erfindungsgemäße Rückgriff auf einen oder mehrere Radialventilatoren zur Unterdruckerzeugung dafür, dass auch wechselnde Belegungen des Fördergurtes nicht zu gravierenden Schwankungen des jeweils an den Ansaugöffnungen des Fördergurtes zur Verfügung stehenden Unterdruckes führen. Als Folge hiervon ist von einer nahezu gleichbleibenden Haltekraft auszugehen, mit deren Hilfe die tafelförmigen Werkstücke am Fördergurt festgehalten werden. Diese Haltekraft kann durch entsprechende Auslegung des Radialventilators insgesamt so eingestellt werden, dass auch maximale Verzögerungen und Beschleunigungen des Fördergurtes während seines Betriebes nicht zu einem Verrutschen der betreffenden Werkstücke führen, und zwar auch dann nicht, wenn sich die Belegung des Fördergurtes ändern sollte. Hierin sind die wesentlichen Vorteile zu sehen.

Erfindungsgemäß ist das Laufrad des Radialventilators mit rückwärts gekrümmten Schaufeln ausgerüstet. Die Rückwärtskrümmung der Schaufeln des Laufrades drückt dabei aus, dass die Schaufeln in Bezug auf eine Drehrichtung der Welle des Laufrades vom Anschlusspunkt an das Laufrad bis zum freien Ende nacheilen, d.h. rückwärts gekrümmt sind, wie dies mit Bezug zur Figurenbeschreibung noch näher erläutert wird. Außerdem sei grundsätzlich Bezug genommen auf die EP 0 112 932 B1, welche einen solchen Radialventilator mit rückwärts gekrümmten und zusätzlich noch profilierten Schaufeln im Detail beschreibt.

Nach vorteilhafter Ausgestaltung sind die im Fördergurt vorgesehenen Ansaugöffnungen in Längsrichtung des Fördergurtes mit vorzugsweise gleichem Abstand angeordnet. Dadurch lässt sich insgesamt über die Längsrichtung des Fördergurtes gesehen eine praktisch gleiche Haltekraft an jeder Position zur Verfügung stellen. Außerdem ist die Auslegung meistens so getroffen, dass jeweils eine Ansaugöffnung zentral in eine zugehörige Saugtasche des Fördergurtes mündet.

Erfindungsgemäß verfügt die Saugtasche über eine Fläche, welche wenigstens das 5-fache des Querschnittes der Ansaugöffnung beträgt. Meistens weist die Fläche sogar das 10-fache und mehr des Querschnittes der Ansaugöffnung auf. Üblicherweise wird sogar so vorgegangen, dass die Saugtasche eine Fläche aufweist, welche mehr als das 20-fache, unter Umständen sogar mehr als das 40-fache des Querschnittes der Ansaugöffnung aufweist. Darüber hinaus gibt die Erfindung vor, dass die Saugtasche mit einer Fläche ausgerüstet wird, welche im Maximum das 100-fache des Querschnittes der Ansaugöffnung beträgt. Regelmäßig liegt die Obergrenze im Maximum bei dem 90-fachen der Fläche der Ansaugöffnung für die Saugtasche. Ganz besonders bevorzugt ist eine Obergrenze für die Fläche der Saugtasche, welche im Maximum das 80-fache des Querschnittes der Ansaugöffnung beträgt.

Durch diese Bemessungsregel werden insgesamt zwei Vorteile erreicht. Zunächst einmal erfährt die Ansaugöffnung durch die sie umgebende Saugtasche gleichsam eine "Vergrößerung", so dass die plattenförmigen bzw. tafelförmigen Werkstücke über eine große und insbesondere vergrößerte Fläche im Vergleich zu der jeweiligen Ansaugöffnung angesaugt und damit gehalten werden. Hier ist man bestrebt, die Saugtasche möglichst groß auszulegen, um den erforderlichen Luftstrom zur Beaufschlagung der Ansaugöffnungen und die Anzahl der Ansaugöffnungen über den Fördergurt gesehen gering zu halten. Umgekehrt kann die Saugtasche aber nicht zu groß ausgelegt werden, weil dann die Gefahr besteht, dass das tafelförmige Werkstück beispielsweise durch Welligkeiten oder andere Unregelmäßigkeiten dass Ein- oder Ansaugen von Nebenluft begünstigt und damit wiederum die zu fördernde Luftmenge und damit auch der Energieverbrauch ansteigt. Jedenfalls hat es sich im Rahmen der Erfindung gezeigt, dass innerhalb der angegebenen Grenzen einerseits eine gute Haftung des Werkstückes am Fördergurt erreicht wird und andererseits der Energieverbrauch ein vertretbares Maß nicht übersteigt. Dadurch wird insgesamt der in der Ansaugöffnung zur Verfügung gestellte Unterdruck auf eine große Fläche, nämlich die Fläche der Saugtasche verteilt, so dass das zu transportierende tafelförmige Werkstück besonders großflächig von dem Fördergurt angesaugt wird.

Die Saugtasche ist in der Regel längserstreckt ausgelegt und vorzugsweise mittig des Fördergurtes angeordnet. An dieser Stelle hat sich besonders eine elliptische Form der Saugtasche als besonders günstig erwiesen. Bei dem Fördergurt handelt es sich erfindungsgemäß um einen Zahnriemenfördergurt, also einen Fördergurt, welcher über endseitig der Haltevorrichtung platzierte Zahnräder geführt wird und die Haltevorrichtung umlaufend umschließt. Der Fördergurt selbst ist regelmäßig aus einem Elastomer gefertigt.

Im Ergebnis wird die Verwendung einer Vorrichtung zum aufliegenden Transport von vorzugsweise tafelförmigen oder plattenförmigen Werkstücken zur Verfügung gestellt, welche einerseits für hohe Fördergeschwindigkeiten und damit einhergehend große Beschleunigungen und Verzögerungen der betreffenden Werkstücke prädestiniert ist. Dadurch ist andererseits ein Transport der betreffenden Werkstücke mit hoher Fördergeschwindigkeit möglich und wird zugleich ein etwaiges Verrutschen der Werkstücke verhindert. Denn die mit Hilfe des erfindungsgemäß eingesetzten Radialventilators durch den Unterdruck erzeugte Haltekraft für die betreffenden Werkstücke am Fördergurt bleibt nahezu konstant, und zwar auch dann, wenn sich die Belegung des Fördergurtes hinsichtlich der Anzahl an zu transportierenden Werkstücken ändern sollte. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die Vorrichtung der erfindungsgemäßen Verwendung in einer perspektivischen Übersichtsdarstellung,
- Fig. 2: eine Detailansicht des Gegenstandes nach der Fig. 1, teilweise im Schnitt,
- Fig. 3: den erfindungsgemäß eingesetzten Radialventilator schematisch und
- Fig. 4: die mit Hilfe des eingesetzten Radialventilators zur Verfügung gestellte Kennlinie.

In den Figuren ist eine Vorrichtung zum aufliegenden Transport von tafelförmigen Werkstücken 1 mit Hilfe von Unterdruck dargestellt. Bei den tafelförmigen Werkstücken 1 kann es sich nicht einschränkend um Blechplatinen handeln. Außerdem besteht ergänzend die Möglichkeit, die fraglichen Blechplatinen 1 nicht nur mit Hilfe von Unterdruck an einem umlaufenden Fördergurt 2 festzuhalten bzw. an diesen anzulegen, sondern kann zusätzlich auch mit Magnethaltevorrichtungen gearbeitet werden. Diese stellen jedoch ausdrücklich eine Option dar und sind vorliegend nicht zwingend.

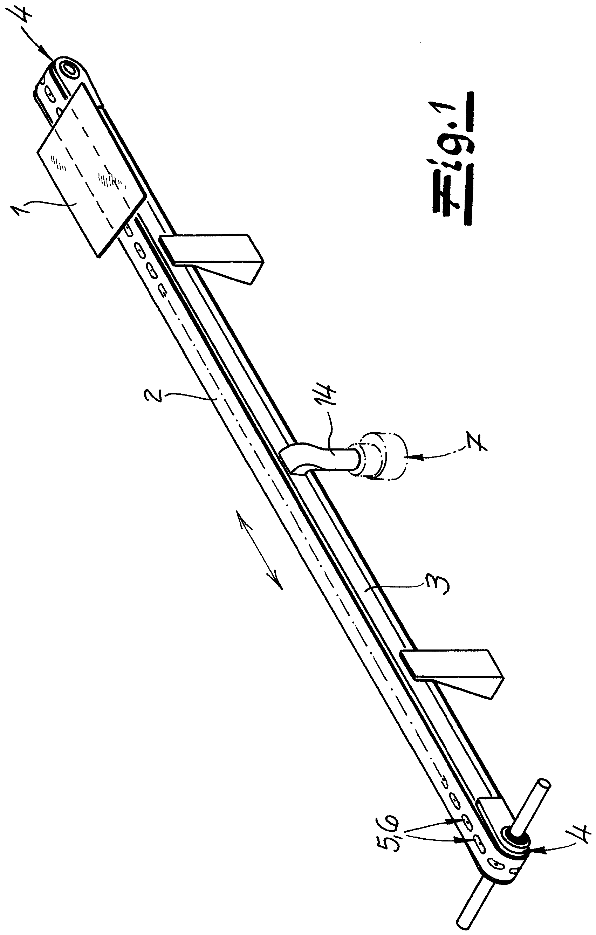

Wie bereits erläutert, werden die tafelförmigen Werkstücke 1 mit Hilfe des umlaufend angetriebenen Fördergurtes 2 für die hieran anzulegenden Werkstücke 1 bewegt, und zwar in der in Fig. 1 dargestellten Längsrichtung entlang einer Haltevorrichtung 3. Dazu wird der Fördergurt 2 an der Haltevorrichtung 3 vorbeigeführt.

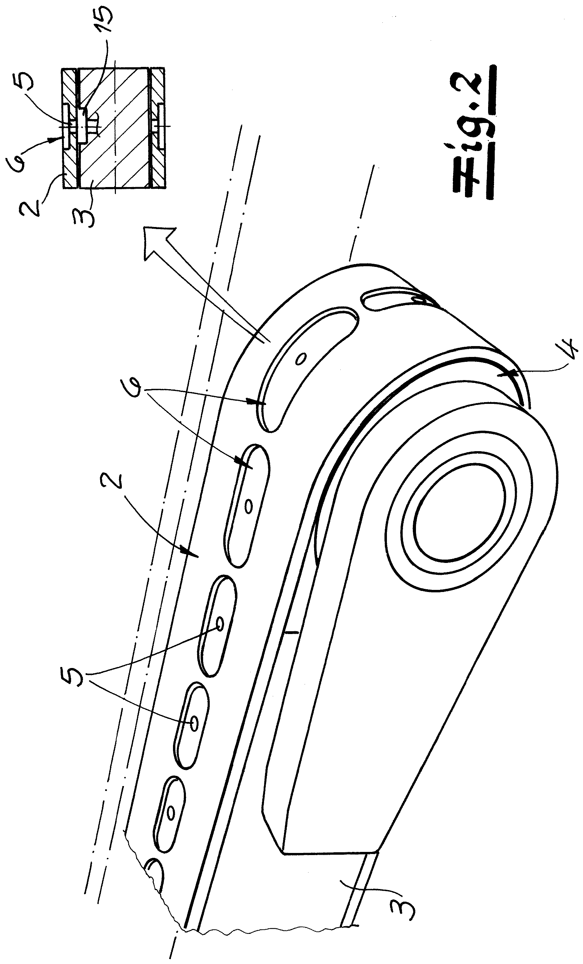

Tatsächlich ist die Auslegung erfindungsgemäß so getroffen, dass der Fördergurt 2 als Zahnriemenfördergurt ausgelegt ist und über zwei jeweils endseitig der Haltevorrichtung 3 gelagerte Zahnräder 4 geführt und angetrieben wird. Die meistens kantenförmige und längserstreckte Haltevorrichtung 3 sorgt durch Erzeugen von Unterdruck dafür, dass die Werkstücke 1 an insbesondere in der Fig. 2 zu erkennenden Ansaugöffnungen 5 am Fördergurt 2 festgehalten werden, und zwar werkstückseitig. Nach dem Ausführungsbeispiel ist die Auslegung so getroffen, dass die Ansaugöffnungen 5 in Längsrichtung des Fördergurtes 2 jeweils mit gleichem Abstand angeordnet sind. Außerdem wird anhand der Fig. 2 deutlich, dass die jeweilige Ansaugöffnung 5 in eine zugehörige Saugtasche 6 im Fördergurt 2 mündet.

Dabei ist die Auslegung ferner so getroffen, dass die jeweilige Ansaugöffnung 5 zentral in die zugehörige Saugtasche 6 mündet. Außerdem erkennt man insbesondere anhand der Fig. 2, dass die jeweilige Saugtasche 6 eine Fläche aufweist, welche nach dem Ausführungsbeispiel wenigstens das 20-fache des Querschnittes der zugehörigen Ansaugöffnung 5 beträgt. Die Saugtasche 6 ist darüber hinaus längserstreckt orientiert. Außerdem findet sich die Saugtasche 6 in Verbindung mit der zentralen und zugehörigen Ansaugöffnung 5 nach dem Ausführungsbeispiel mittig des Fördergurtes 2. Schließlich ist die Saugtasche 6 nach dem Ausführungsbeispiel elliptisch bzw. langlochartig ausgebildet, was keinesfalls zwingend ist.

Durch die elliptische Auslegung der betreffenden Saugtasche 6 können die einzelnen Saugtaschen 6 mit geringem Abstand in Längsrichtung des Fördergurtes 2 aneinander anschließend angeordnet werden, so dass hierdurch eine große Fläche zur Verfügung steht, um auf diese Weise mit der durch den Unterdruck zur Verfügung gestellten Haltekraft das jeweils zu transportierende tafelförmige Werkstück 1 sicher und ohne Verrutschen an den Fördergurt 2 anzulegen und mit seiner Hilfe in Längsrichtung der Haltevorrichtung 3 transportieren zu können. Dabei sind auch hohe Fördergeschwindigkeiten möglich.

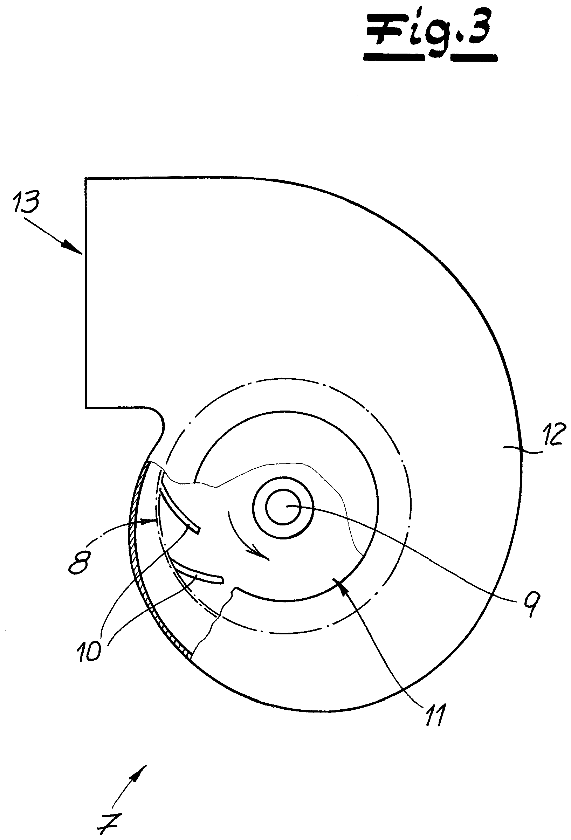

Erfindungsgemäß ist nun zusätzlich noch ein Gebläse 7 vorgesehen, welches in der Fig. 1 angedeutet ist und dessen Detailausprägung Gegenstand der Fig. 3 ist. Denn bei dem Gebläse 7 handelt es sich im Rahmen des Ausführungsbeispiels um einen Radialventilator 7. Der Radialventilator 7 verfügt ausweislich der Detaildarstellung in der Fig. 3 über ein Laufrad 8, welches mit Hilfe einer Welle 9 angetrieben wird. Das Laufrad bzw. Radiallaufrad 8 ist mit rückwärts gekrümmten Schaufeln 10 ausgerüstet, deren Rückwärtskrümmung sich unmittelbar erschließt, wenn man die in der Fig. 3 dargestellte Drehrichtung der Welle 9 im hier eingezeichneten Gegenuhrzeigersinn betrachtet. Die Drehung der Welle 9 wird dabei nach dem Ausführungsbeispiel mit Hilfe eines an die Welle 3 angeflanschten Elektromotors erzeugt.

Als Folge hiervon steht an einer parallel zur Welle des Laufrades 8 orientierten Ansaugöffnung 11 der gewünschte Unterdruck zur Verfügung. Tatsächlich wird die Luft über die Ansaugöffnung 11 in ein spiral- oder schneckenförmiges Gehäuse 12 axial zur Welle 9 eingesaugt und über eine Ausblasöffnung 13 nach außen hin abgegeben. Die Ansaugöffnung 11 ist nach dem Ausführungsbeispiel an eine mit der Haltevorrichtung 3 kommunizierende Unterdruckleitung 14 angeschlossen, die man insbesondere in der Fig. 1 erkennt. Dadurch kann das Innere der Haltevorrichtung 3, welches nach dem Ausführungsbeispiel geschlossen ausgebildet ist und folglich einen geschlossenen Unterdruckkanal definiert, mit dem seitens des erfindungsgemäßen Radialventilators 7 erzeugten Unterdruck beaufschlagt werden.

Dieser Unterdruck im Innern des geschlossenen Unterdruckkanals bzw. im Innern der geschlossenen Haltevorrichtung 3 liegt auch an einem insbesondere in der Schnittdarstellung der Fig. 2 zu erkennenden Ansaugkanal 15 kopfseitig der Haltevorrichtung 3 an. Innerhalb des Ansaugkanals 15 kopfseitig der Haltevorrichtung 3 bewegen sich die Ansaugöffnungen 5 zusammen mit den Ansaugtaschen 6 des Fördergurtes 2, so dass über die Ansaugöffnungen 5 auch die Saugtaschen 6 mit dem erforderlichen Unterdruck beaufschlagt werden und auf diese Weise die gewünschte Haltekraft für das jeweilige und an dem Fördergurt 2 festzuhaltende tafelförmige Werkstück 1 zur Verfügung stellen.

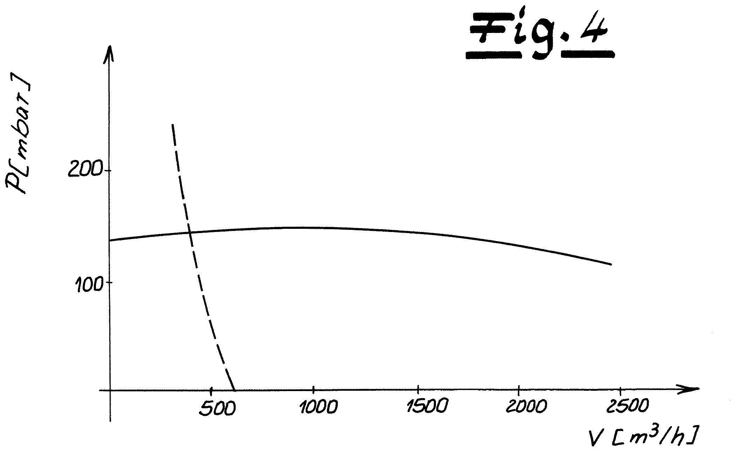

In der Figur 4 ist nun eine Kennlinie des erfindungsgemäßen Radialventilators 7 schematisch wiedergegeben. Aufgetragen ist hierbei der Druck bzw. Unterdruck P in Abhängigkeit vom geförderten Volumenstrom V. Der Unterdruck P mag im Beispielfall Werte zwischen in etwa 100 mbar bis 200 mbar annehmen. Der Volumenstrom V nimmt zugehörige Werte von in etwa 0 m³/h bis in etwa 2500 m³/h an. Das gilt selbstverständlich nur beispielhaft. Man erkennt, dass über den gesamten dargestellten Volumenstrom gesehen der erzeugte Unterdruck P nahezu konstant bleibt. Dazu ist die Kennlinie des erfindungsgemäßen Radialventilators 7 durchgezogen dargestellt. Im Gegensatz dazu zeigt eine als Vergleich gestrichelt eingezeichnete Kennlinie bei einem Seitenkanalverdichteter wie er bisher in der Praxis eingesetzt wurde eine starke Abhängigkeit des Unterdruckes P vom Volumenstrom V und damit auch der Belegung des Fördergurtes 2 je nach Anzahl der hiermit transportierten Werkstücke 1.

## Patentansprüche

1. Verwendung einer Vorrichtung zum aufliegenden Transport von vorzugsweise tafelförmigen Werkstücken (1) mittels Unterdruck, mit zumindest einem umlaufend angetriebenen Fördergurt (2) für die hieran anzulegenden Werkstücke (1), und mit einer Haltevorrichtung (3), an welcher der Fördergurt (2) vorbeigeführt wird, wobei
die Haltevorrichtung (3) die Werkstücke (1) durch Erzeugen von Unterdruck an Ansaugöffnungen (5) des Fördergurtes (2) am Fördergurt (2) werkstückseitig festhält,
der Unterdruck durch zumindest ein Gebläse (7) erzeugt wird,
der Fördergurt (7) als Zahnriemenfördergurt ausgebildet ist,
die jeweilige Ansaugöffnung (5) in eine Saugtasche (6) in dem Fördergurt (2) mündet, welche eine Fläche aufweist, die wenigstens das 5-fache und im Maximum das 100-fache des Querschnittes der Ansaugöffnung (5) beträgt,
**dadurch gekennzeichnet, dass**
das Gebläse (7) als Radialventilator (7) ausgebildet ist, welcher ein Laufrad (8) mit rückwärts gekrümmten Schaufeln (10) aufweist,
der Radialventilator (7) unabhängig und örtlich getrennt von der Haltevorrichtung (3) platziert werden kann,
der Fördergurt (7) über jeweils zwei endseitig der Haltevorrichtung (3) gelagerte Zahnräder (4) geführt und angetrieben wird,
der Radialventilator (7) mit einem schneckenförmigen Gehäuse (12) ausgerüstet ist, welches in einen Auslass mündet und Luft an einer parallel zur Welle (9) des Laufrads (8) orientierten Ansaugöffnung (11) ansaugt, die an eine mit der Haltevorrichtung (3) kommunizierende Unterdruckleitung (14) angeschlossen ist, wobei
die Unterdruckleitung (14) dafür sorgt, dass in bzw. an der Haltevorrichtung (3) der erforderliche Unterdruck (P) zur Verfügung steht, wobei
der vom Radialventilator (7) erzeugte Unterdruck (P) über den gesamten Volumenstrom (V) gesehen nahezu konstant bleibt.

2. Verwendung nach Anspruch 1, **dadurch gekennzeichnet, dass** die Haltevorrichtung (3) einen geschlossenen Unterdruckkanal aufweist oder als ein solcher ausgebildet ist, wobei der Unterdruckkanal über einen Ansaugkanal (15) mit den Ansaugöffnungen (5) des Fördergurtes (2) kommuniziert.

3. Verwendung nach einem der Ansprüche 1 oder 2, **dadurch gekennzeichnet, dass** die Ansaugöffnungen (5) in Längsrichtung des Fördergurtes (2) mit vorzugsweise gleichem Abstand angeordnet sind.

4. Verwendung nach einem der Ansprüche 1 bis 3, **dadurch gekennzeichnet, dass** die jeweilige Ansaugöffnung (5) zentral in die zugehörige Saugtasche (6) mündet.

5. Verwendung nach einem der Ansprüche1 bis 4, **dadurch gekennzeichnet, dass** die Saugtasche (6) eine Fläche aufweist, welche das 10-fache und bevorzugt das 20-fache und mehr, des Querschnittes der Ansaugöffnung (5) beträgt.

6. Verwendung nach einem der Ansprüche 1 bis 5, **dadurch gekennzeichnet, dass** die Saugtasche (6) eine Fläche aufweist, die im Maximum das 90-fache und bevorzugt das 80-fache im Maximum des Querschnittes der Ansaugöffnung (5) beträgt.

7. Verwendung nach einem der Ansprüche 1 bis 6, **dadurch gekennzeichnet, dass** die Saugtasche (6) längserstreckt und vorzugsweise mittig des Fördergurtes (2) vorgesehen ist.

8. Verwendung nach einem der Ansprüche 1 bis 7, **dadurch gekennzeichnet, dass** die Saugtasche (6) elliptisch ausgebildet ist.

## Claims

1. Use of a device for the horizontal transport of preferably tabular workpieces (1) by means of a vacuum, with at least one conveyor belt (2) driven in circulation for the workpieces (1) to be laid thereon, and with a holding device (3) past which the conveyor belt (2) is guided, wherein
the holding device (3) holds the workpieces (1) in place on the conveyor belt (2) on the workpiece side by the generation of a vacuum at suction openings (5) of the conveyor belt (2),
the vacuum is generated by at least one blower (7),
the conveyor belt (7) is designed as a toothed conveyor belt,
each suction opening (5) opens into a suction pocket (6) in the conveyor belt (2), which suction pocket has an area that is at least 5 times and at maximum 100 times the cross section of the suction opening (5),
**characterised in that**
the blower (7) is designed as a radial fan (7) that has an impeller (8) with backwardly curved blades (10),
the radial fan (7) can be positioned independently and spatially separately from the holding device (3),
the conveyor belt (7) is guided and driven over two gearwheels (4) mounted at the ends of the holding device (3),
the radial fan (7) is equipped with a spiral housing (12), which opens into an outlet and sucks in air at a suction opening (11) that is oriented parallel to the shaft (9) of the impeller (8) and is connected to a vacuum line (14) that communicates with the holding device (3), wherein
the vacuum line (14) ensures that the necessary vacuum (P) is available in or at the holding device (3), wherein
the vacuum (P) generated by the radial fan (7) remains virtually constant as seen over the entire volumetric flow (V).

2. The use according to Claim 1, **characterised in that** the holding device (3) has or is designed as a closed vacuum duct, wherein the vacuum duct communicates with the suction openings (5) of the conveyor belt (2) via a suction duct (15).

3. The use according to one of Claims 1 or **2, characterised in that** the suction openings (5) are arranged at preferably the same distance in the longitudinal direction of the conveyor belt (2).

4. The use according to one of Claims 1 to 3, **characterised in that** each suction opening (5) opens centrally into the associated suction pocket (6).

5. The use according to one of Claims 1 to 4, **characterised in that** the suction pocket (6) has an area that is 10 times, and preferably 20 times and more, the cross section of the suction opening (5).

6. The use according to one of Claims 1 to 5, **characterised in that** the suction pocket (6) has an area that is at maximum 90 times and preferably at maximum 80 times the cross section of the suction opening (5).

7. The use according to one of Claims 1 to 6, **characterised in that** the suction pocket (6) is provided in an elongate manner and preferably in the centre of the conveyor belt (2).

8. The use according to one of Claims 1 to 7, **characterised in that** the suction pocket (6) is elliptical.

## Revendications

1. Utilisation d'un dispositif, destiné au transport en appui de pièces à usiner (1) de préférence tabulaires au moyen d'une dépression, pourvu d'au moins une bande transporteuse (2) entraînée en révolution pour les pièces à usiner (1) qui doivent être appuyées sur celle-ci et pourvu d'un dispositif de retenue (3), devant lequel est guidée la bande transporteuse (2),
le dispositif de retenue (3) retenant les pièces à usiner (1) sur la bande transporteuse (2), du côté des pièces à usiner par génération d'une dépression sur des orifices d'aspiration (5) de la bande transporteuse (2),
la dépression étant générée par un ventilateur (7),
la bande transporteuse (7) étant conçue sous la forme d'une bande transporteuse à courroie dentée,
l'orifice d'aspiration (5) respectif débouchant dans une ventouse (6) dans la bande transporteuse (2), laquelle présente une surface qui correspond à au moins 5 fois et à au maximum 100 fois la section transversale de l'orifice d'aspiration (5),
**caractérisée en ce que**
le ventilateur (7) est conçu sous la forme d'un ventilateur radial (7), lequel comporte une turbine (8) munie d'aubes (10) recourbées sur la face arrière,
le ventilateur radial (7) peut se placer en étant indépendant et localement séparé du dispositif de retenue (3),
la bande transporteuse (7) est guidée et entraînée par chaque fois deux roues dentées (4) logées du côté extrémité du dispositif de retenue (3),
le ventilateur radial (7) est équipé d'un carter (12) hélicoïdal, lequel débouche dans une sortie et aspire de l'air sur un orifice d'aspiration (11) orienté à la parallèle de l'arbre (9) de la turbine (8), qui est raccordé sur une conduite de dépression (14) communiquant avec le dispositif de retenue (3),
la conduite de dépression (14) assurant que la dépression (P) requise soit disponible dans ou sur le dispositif de retenue (3),
vue sur l'ensemble du débit volumétrique (V), la dépression (P) générée par le ventilateur radial (7) étant quasiment constante.

2. Utilisation selon la revendication 1, **caractérisée en ce que** le dispositif de retenue (3) comporte un canal de dépression fermé ou est conçu sous la forme d'un tel, le canal de dépression communiquant par l'intermédiaire d'un canal d'aspiration (15) avec les orifices d'aspiration (5) de la bande transporteuse (2).

3. Utilisation selon l'une quelconque des revendications 1 ou 2, **caractérisée en ce que** les orifices d'aspiration (5) sont placés avec de préférence un écart identique dans la direction longitudinale de la bande transporteuse (2).

4. Utilisation selon l'une quelconque des revendications 1 ou 3, **caractérisée en ce que** l'orifice d'aspiration (5) respectif débouche au centre dans la ventouse (6) associée.

5. Utilisation selon l'une quelconque des revendications 1 à 4, **caractérisée en ce que** la ventouse (6) présente une surface, laquelle correspond à 10 fois et de préférence à 20 fois et plus la section transversale de l'orifice d'aspiration (5).

6. Utilisation selon l'une quelconque des revendications 1 ou 5, **caractérisée en ce que** la ventouse (6) présente une surface qui correspond au maximum à 90 fois et de préférence à 80 fois au maximum la section transversale de l'orifice d'aspiration (5).

7. Utilisation selon l'une quelconque des revendications 1 à 6, **caractérisée en ce que** la ventouse (6) est prévue en s'étendant en longueur et de préférence au centre de la bande transporteuse (2).

8. Utilisation selon l'une quelconque des revendications 1 à 7, **caractérisée en ce que** la ventouse (6) est conçue de forme elliptique.
